(19) Europäisches Patentamt
European Patent Office
Office européen des brevets

(11) Publication number: **0 279 552 A2**

# (12) EUROPEAN PATENT APPLICATION

(21) Application number: 88300855.9

(22) Date of filing: 02.02.88

(51) Int. Cl.4: G05D 22/02

(30) Priority: 20.02.87 JP 37348/87

(43) Date of publication of application: 24.08.88 Bulletin 88/34

(84) Designated Contracting States: CH DE FR GB IT LI

(71) Applicant: YUKYAN KABUSHIKI KAISHA
810 Mejirodai Haimu 1214-1 Kunugida-cho
Hachioji-shi Tokyo(JP)

(72) Inventor: Ando, Iwao c/o Yukyan Kabushiki Kaisha
810 Mejirodai Haimu 1214-1 Kunugida-Cho
Hachioji-Shi Tokyo(JP)

(74) Representative: Tomlinson, Kerry John et al
Frank B. Dehn & Co. European Patent Attorneys Imperial House 15-19 Kingsway
London WC2B 6UZ(GB)

## (54) Humidification control system.

(57) The humidity within a chamber (1) is detected by a humidity detector (2) and the proportional value, integrated value and differentiated value of the difference between the detected humidity and a preset objective value are added (11) to produce an operation amount signal. A predetermined period is divided into a spraying time of oscillating the oscillator (13) of an ultrasonic humidifier (12) with an amplitude such as to generate a predetermined sprayed amount per unit time, and a non-spraying time of oscillating the oscillator with such small amplitude as generates no spray from the ultrasonic humidifier. The predetermined period is repeated and the spraying time in each fixed period is adjusted in response to the operation amount signal to keep the humidity within the chamber constant.

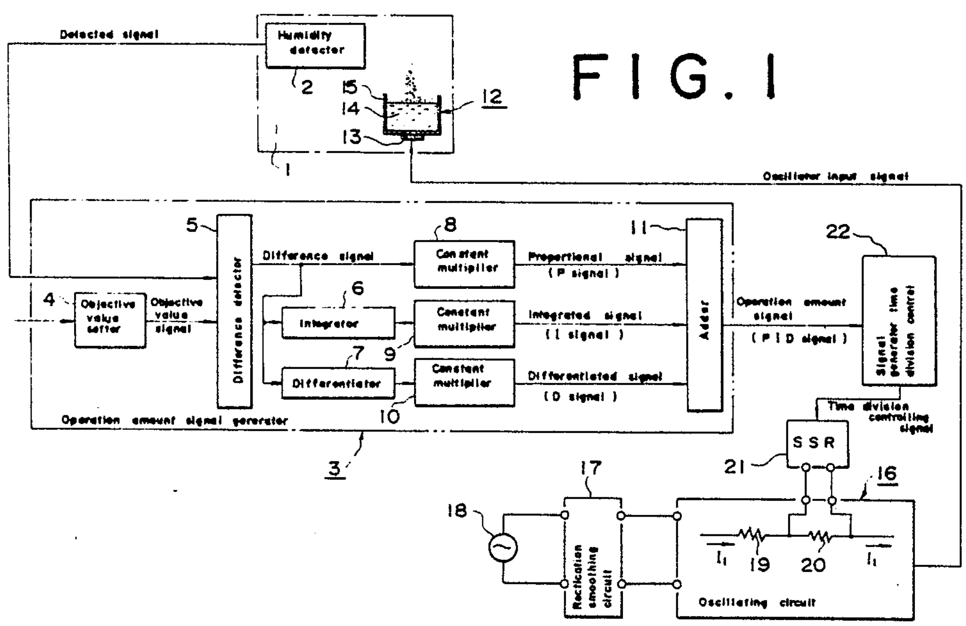


FIG. 1

EP 0 279 552 A2

Xerox Copy Centre

## HUMIDIFICATION CONTROL SYSTEM

This invention relates to a humidification control system for keeping the humidity within a controlled chamber at a fixed objective value by using an ultrasonic humidifier. The controlled chamber may be any space in which the humidity is to be controlled.

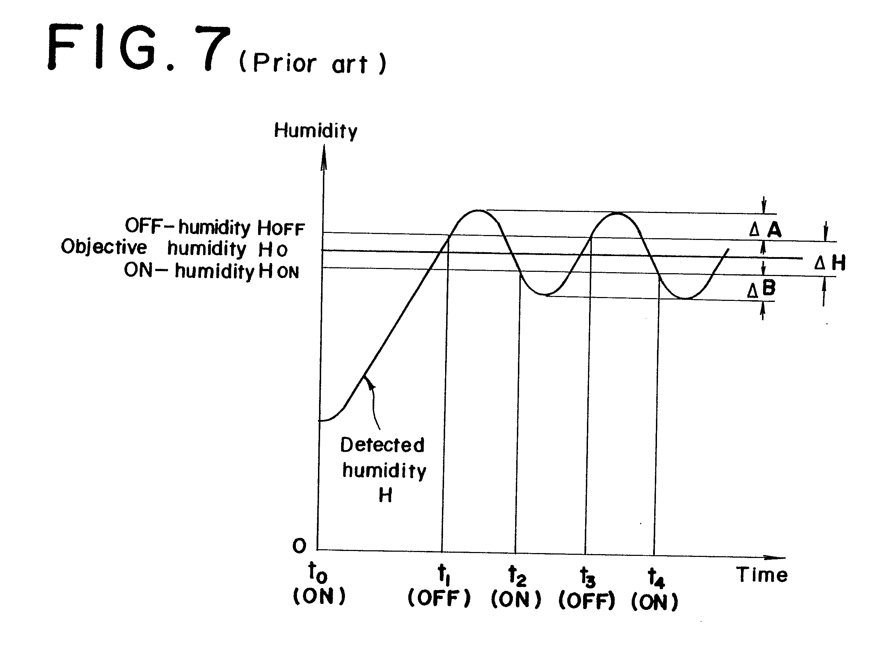

Heretofore, when keeping the humidity within a controlled chamber constant by using an ultrasonic humidifier, the humidity within the controlled chamber has been controlled by such ON-OFF-operations as are shown in Fig. 7.

That is to say, as shown in Fig. 7, an ON-humidity $H_{ON}$ and OFF-humidity $H_{OFF}$ having a hysteresis $\Delta H$ for an objective humidity $H_O$ are determined, the humidity within the controlled chamber is detected with a humidity detector, at the time points $t_1$ and $t_3$ when the detected humidity reaches the OFF-humidity $H_{OFF}$ while rising, the oscillation of the oscillator of the ultrasonic humidifier is completely stopped and, at the time points $t_2$ and $t_4$ when the detected humidity H reaches the ON-humidity while falling, the oscillator of the ultrasonic humidifier is oscillated with an amplitude of 100%.

In the case shown in Fig. 7, the detected humidity H at the control starting time point $t_0$ is so low that the oscillator of the ultrasonic humidifier oscillates with an amplitude of 100%.

However, as the place of setting the ultrasonic humidifier and the place of setting the humidity detector are usually separated from each other, the time taken to transmit air humidified by spray is comparatively long and the time taken by the humidity detector to sense the air cannot be neglected. Therefore, in the humidification control system, the transmission delay and wasted time are generally so large that, with the conventional humidification control system, there have been the defects that, as shown in Fig. 7, an overshoot $\Delta A$ and undershoot $\Delta B$ will be generated, therefore a cycling (continued oscillation) of a large amplitude will occur and the humidity within the controlled chamber will not be able to be precisely kept constant.

Also, in the conventional humidification control system, as described above, the hysteresis $\Delta H$ is provided to somewhat reduce the frequency of the ON-OFF-operations (the oscillation of 100% amplitude and the complete stop of the oscillation) of the oscillator of the ultrasonic humidifier. Precision is reduced by the provision of the hysteresis $\Delta H$, but a smaller hysteresis leads to a high frequency of ON-OFF-operations which renders the oscillator prone to damage.

The present invention has as an object to provide a humidification control system with an ultrasonic humidifer whereby the humidity within a controlled chamber can be stably and highly precisely kept at a fixed objective value without causing a cycling or offset and can be altered within a short time even if an external turbulence is applied as in case a door of the controlled chamber is opened and closed.

The humidity within the controlled chamber is detected with a humidity detector and the proportional value, integrated value and differentiated value of the difference between the detected signal and the preset objective value signal are added to form an operation amount signal.

A predetermined period is divided into a spraying time of oscillating the oscillator of the ultrasonic humidifier with an amplitude obtaining a predetermined sprayed amount per unit time from the ultrasonic humidifier and a non-spraying time of oscillating the oscillator of the ultrasonic humidifier with such smaller amplitude as generates no spray from the ultrasonic humidifier.

The predetermined period is repeated and the spraying time in each fixed period is adjusted in response to the operation amount signal to keep the humidity within the controlled chamber constant.

As the predetermined period is divided into the spraying time and stopping time and is repeated, if seen instantaneously, the sprayed amount per unit time from the ultrasonic humidifier will be 100% during the spraying time and will be 0% during the non-spraying time but the average of the sprayed amounts will be

$$\frac{\text{Spraying time}}{\text{Predetermined period (=spraying time + non-spraying time)}} \times 100\%$$

Therefore, if the predetermined period is made somewhat shorter, when the spraying time is varied from 0 to the predetermined period, the sprayed amount per unit time from the ultrasonic humidifier will be able to be continuously varied from 0 to 100%.

Thus, as the spraying time in each predetermined period is adjusted in response to the operation amount signal, the sprayed amount in response to the operation amount signal will be generated from the ultrasonic humidifier.

Further, where the humidity within the controlled chamber is detected with the humidity detector and the proportional value, integrated value and differentiated value of the difference between the detected signal and the preset objective value signal are added to be the operation amount signal, a control by a PID operation is realised in which the humidity within the controlled chamber is made a controlled amount and the sprayed amount from the ultrasonic humidifier is made an operation amount.

Thus, there are advantages that, though the time taken to transmit air humidified by spraying is comparatively long and the sensing time of the humidity detector itself cannot be neglected, that is, though the transmission delay and wasted time are large, the humidity within the controlled chamber can be stably and highly precisely kept at a fixed objective value without causing a cycling or offset and can be altered within a short time even in the case that an external turbulence is applied, such as in case the door of the controlled chamber is opened and closed.

Furthermore, there are advantages that, when the predetermined period is set to be comparatively short, the frequency of repeating the spraying time and stopping time will be high but, during the stopping time, the oscillator of the ultrasonic humidifier will not completely stop oscillating as in the past but will oscillate with such small amplitude as will generate no spray from the ultrasonic humidifier and will be, so to say, warming up and will not be likely to be broken even if the frequency is high.

An embodiment of the invention will now be described, by way of example, with reference to the accompanying drawings, of which:-

Fig. 1 is a block diagram of an apparatus using a humidification control system of the present invention.

Figs. 2 to 5 show operating states in respective sprayed amounts, (a) being a time chart of operation of a solid state relay (SSR) and (b) being a waveform diagram of an oscillator input signal.

Fig. 6 is a diagram showing the relationship between the time lapse and humidity in the humidity control system of the present invention.

Fig. 7 is a diagram showing the relationship between the time lapse and humidity in a conventional humidification control system.

In Fig. 1, the reference numeral 1 represents a controlled chamber and 2 represents a humidity detector for detecting the humidity within the controlled chamber 1. For example, a high molecular weight humidity sensor can be used for this humidity detector 2.

In the present embodiment, the humidity within the controlled chamber 1 is detected with the humidity detector 2 and the proportional value, integrated value and differentiated value of the difference between the detected signal and a preset objective value signal are added to produce an operation amount signal.

In the case of the apparatus shown in Fig. 1, the detected signal from the humidity detector 2 is put into an operation amount signal generator 3 and the operation amount signal (PID signal) is put out of the operation amount signal generator. That is to say, as shown in Fig. 1, the operation amount signal generator 3 is formed of an objective value setter 4, difference detector 5, integrator 6, differentiator 7, constant multipliers 8, 9 and 10 and adder 11. Therefore, when the user sets in advance an objective humidity within the controlled chamber 1 with the objective value setter 4, the difference between the detected signal from the humidity detector 2 and the preset objective value signal will be put out as a difference signal. This difference signal will be multiplied by a predetermined constant by the constant multiplier 8 and the proportional value of the difference will be put as a proportional signal (P signal) into the adder 11. The difference signal will be integrated by the integrator 6 and will be multiplied by a predetermined constant by the constant multiplier 9 and the integrated value of the difference will be put as an integrated signal (I signal) into the adder 11. Further, the difference signal will be differentiated by the differentiator 7 and will be further multiplied by a predetermined constant by the constant multiplier 10 and the differentiated value of the difference will be put as a differentiated signal (D signal) into the adder 11. Thus, an operation amount signal (PID signal) of the sum of the proportional value, integrated value and differentiated value of the difference between the detected signal and the preset objective value signal will be put out of the adder 11.

A predetermined period T is divided into a spraying time $t_1$ of oscillating an oscillator 13 of an ultrasonic humidifier 12 with an amplitude obtaining a predetermined spray amount per unit time from the ultrasonic humidifier and a non-spraying time $t_2$ of oscillating the oscillator 13 of the ultrasonic humidifier 12 with such small amplitude as generates no spray from the ultrasonic humidifier.

In the case of the apparatus shown in Fig. 1, the ultrasonic humidifier 12 is formed of a sprayed water tank 15 containing water 14 to be sprayed, the oscillator 13 fitted to the bottom of the sprayed water tank 15 and an oscillating circuit 16 supplying as an oscillator input signal to the oscillator 13 an alternating current voltage of the same frequency as of the ultrasonic waves. A rectification smoothing circuit 17 is connected on its output side to the oscillating circuit 16, an alternating current source 18 is connected to the input side of the rectification smoothing circuit 17 and a direct current voltage is put into the oscillating circuit 16. Various kinds of oscillating circuit 16 can be used. In the case shown in Fig. 1, the oscillating circuit has a series circuit of resistances 19 and 20 within it so that an alternating current voltage having an amplitude determined by the size of the current $I_1$ flowing through this circuit and having the same predetermined frequency (constant) as of the ultrasonic waves may be put out as an oscillator input signal. The resistance 20 is connected at both ends to an SSR (solid state relay) 21 and the resistance values of the resistances 19 and 20 are so determined that, when the SSR 21 is ON the amplitude of the oscillation of the oscillator 13 will become so large that a predetermined sprayed amount per unit time will be obtained from the sprayed water tank 15 of the ultrasonic humidifier 12 but, when the SSR 21 is OFF, the oscillation of the oscillator 13 will become so small that no spray will be generated from the ultrasonic humidifer 12. That is to say, when the SSR 21 is ON, the resistance 20 will be short-circuited at both ends, the current $I_1$ will become large, the amplitude of the oscillator input signal will become large and the oscillator 13 will oscillate with an amplitude obtaining a predetermined sprayed amount per unit time from the ultrasonic humidifier 12. When the SSR 21 is OFF, the current $I_1$ will become smaller, the amplitude of the oscillator input signal will become smaller and the oscillator 13 will oscillate with such small amplitude as will generate no spray from the ultrasonic humidifier 12. Therefore, in the case of the apparatus shown in Fig. 1, the ON-time of the SSR 21 corresponds to the spraying time $t_1$ and the OFF-time of the SSR 21 corresponds to the non-spraying time $t_2$. In the case of Fig. 1, the SSR 21 is controlled to be ON and OFF by a time division controlling signal generator 22 and a predetermined period T is divided into the ON-time of the SSR 21 and the OFF-time of the SSR 21. Therefore, the predetermined period T is divided into the spraying time $t_1$ and non-spraying time $t_2$.

In the present invention, the predetermined period T is repeated and the spraying time $t_1$ in each predetermined period T is adjusted in response to the operation amount signal so that the humidity within the controlled chamber 1 may be kept constant at the objective value.

In the case of the apparatus shown in Fig. 1, the time division controlling signal will be periodically repeatedly generated from the time division controlling signal generator in the predetermined period T and the length of the ON-time of the SSR 21 in each predetermined period will be adjusted on the basis of the operation amount signal put into the time division controlling signal generator 22. This is to say, the higher the level of the operation amount signal, the longer the ON-time of the SSR 21. The lower the level, the shorter the ON-time of the SSR 21.

As the predetermined period T is divided into the spraying time $t_1$ and non-spraying time $t_2$ and is repeated, if seen instantaneously, the sprayed amount per unit time from the ultrasonic humidifier 12 will be 100% during the spraying time $t_1$ and will be 0% during the stopping time $t_2$ but will be

$$\frac{t_1}{T\ (= t_1 + t_2)} \times 100(\%)$$

on average. Therefore, if the predetermined period T is made sufficiently short, when the spraying time $t_1$ is varied from 0 to the predetermined period T, the sprayed amount per unit time from the ultrasonic humidifier 12 will be able to be effectively continuously varied from 0 to 100%. By the way, Fig. 2 shows the state that the sprayed amount per unit time from the ultrasonic humidifier 12 is 50%, Fig. 3 shows the state that it is 25%, Fig. 4 shows the state that it is 0% and Fig. 5 shows the state that it is 100%. In these diagrams, (a) is a time chart of the operation of the SSR 21 and (b) is a waveform diagram of the oscillator input signal.

As the spraying time $t_1$ in the period T is adjusted in response to the operation amount signal, the sprayed amount in response to the operation amount will be generated from the ultrasonic humidifier 12.

Further, in the present embodiment, as the humidity within the controlled chamber 1 is detected with the humidity detector 2 and the proportional value, integrated value and differentiated value of the difference between the detected signal and the preset objective value signal are added to be the operation amount signal, a control by a PID operation is realized in which the humidity within the controlled chamber 1 is made a controlled amount and the sprayed amount from the ultrasonic humidifier 12 is made an operation amount.

Consequently, there are advantages that, though the time taken to transmit air humidified by spraying is comparatively long and the sensing time of the humidity detector 2 iteslf cannot be neglected, that is, though the transmission delay and wasted time are large, as shown in Fig. 6, the humidity within the controlled chamber can be stably and highly precisely kept at a fixed objective value without causing a cycling or offset and can be altered within a short time even if an external turbulence is applied, such as the door of the controlled chamber being opened and closed.

Further, there are advantages that, in case the predetermined period T is set to be comparatively short, the frequency of repeating the spraying time $t_1$ and non-spraying time $t_2$ will be high but, during the non-spraying time $t_2$, the oscillator 13 of the ultrasonic humidifier 12 will not completely stop oscillating as in the past but will oscillate with such small amplitude as will generate no spray from the ultrasonic humidifier 12 and will be, so to say, warming up and will not be likely to be broken even if the frequency is high.

The shorter the predetermined period T, the higher the precision with which the humidity within the controlled chamber 1 can be kept at a fixed objective value. In the humidification control system, the transmission delay and wasted time are so long that, even if the predetermined period T is set to be comparatively long (for example, about 3 to 30 seconds), the precision will be able to be made high enough.

Once the objective humidity within the controlled chamber is set, it will not vary. However, the objective value can be varied with the lapse of time, for example, by giving a controlling signal to the objective value setter 4 from outside.

As described in detail in the above, there are thus obtained effects that the humidity within the controlled chamber can be stably and highly precisely kept at a fixed objective value without causing a cycling or offset and can be altered within a short time even if an external turbulence is applied, such as the door of the controlled chamber being opened and closed, and that the oscillator of the ultrasonic humidifier is not likely to be broken.

## Claims

1. A humidification control system comprising an ultrasonic humidifier having an oscillator and a humidity detector responsive to the humidity within a chamber, characterised in that the proportional value, integrated value and differentiated value of the difference between the output signal of the humidity detector and a preset objective value signal are added to produce an operation amount signal and a predetermined period is divided into a spraying time during which the amplitude of oscillation of said oscillator is such as to generate a predetermined rate of spray, and a non-spraying time during which the oscillation is of such small amplitude as to generate no spray, said predetermined period being repeated and the spraying time in each period adjusted in response to said operation amount signal to keep the humidity within said chamber substantially at said objective value.

2. A humidification control system according to claim 1 comprising time division means arranged to generate a time division signal dependent on said operation amount signal, and a relay adapted to switch a resistance in and out of an oscillator circuit in accordance with said time division signal and thereby to switch the amplitude of oscillation.

FIG. 1

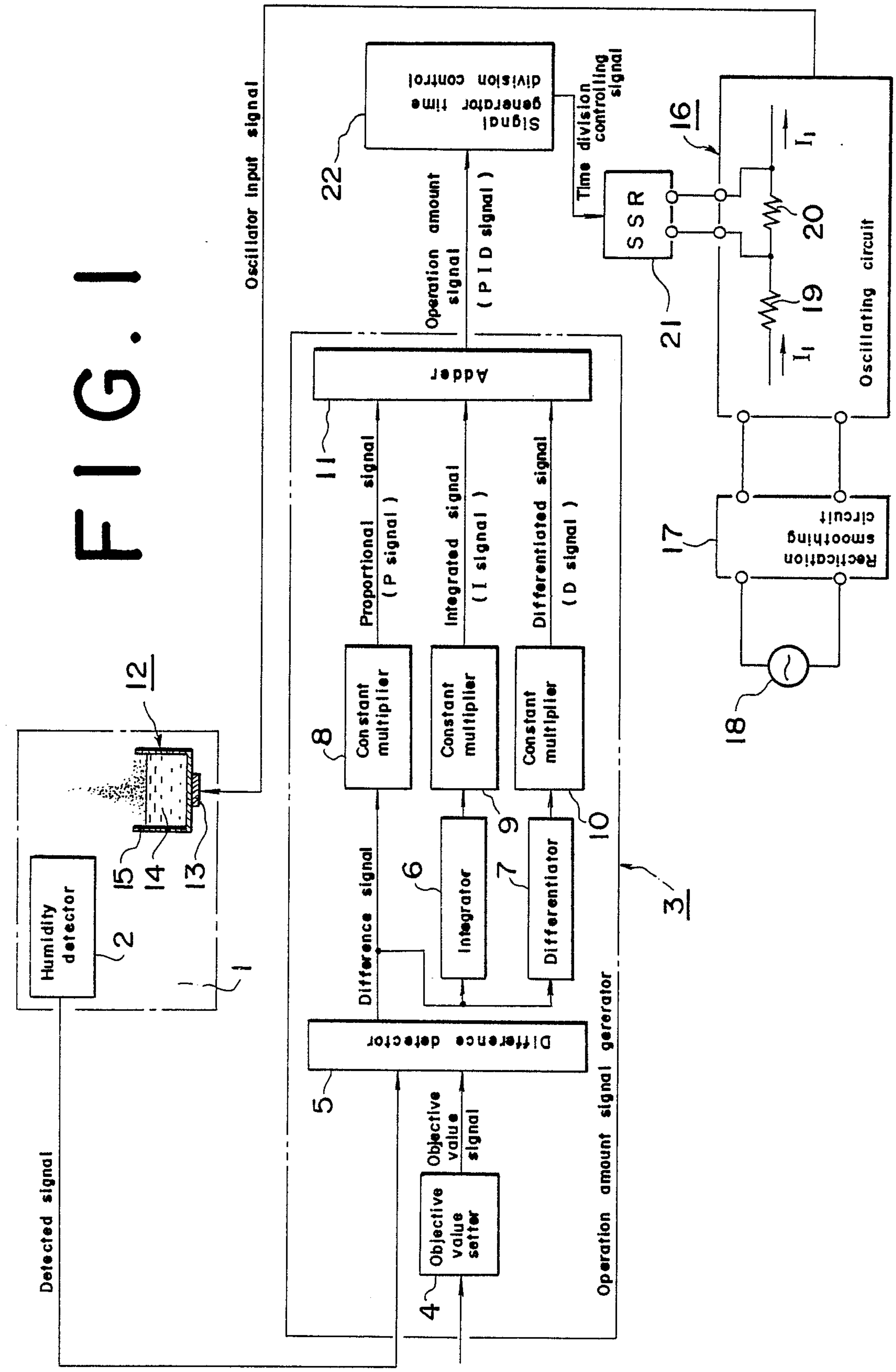

Humidity detector
2
1
12
15
14
13
Detected signal
Oscillator input signal
Objective value setter
4
Objective value signal
Difference detector
5
Difference signal
Integrator
6
Differentiator
7
Constant multiplier
8
Constant multiplier
9
Constant multiplier
10
Proportional signal (P signal)
Integrated signal (I signal)
Differentiated signal (D signal)
Adder
11
Operation amount signal generator
3
Operation amount signal (P I D signal)
Signal generator time division control
22
Time division controlling signal
SSR
21
19
20
I1
16
Oscillating circuit
Rectication smoothing circuit
17
18

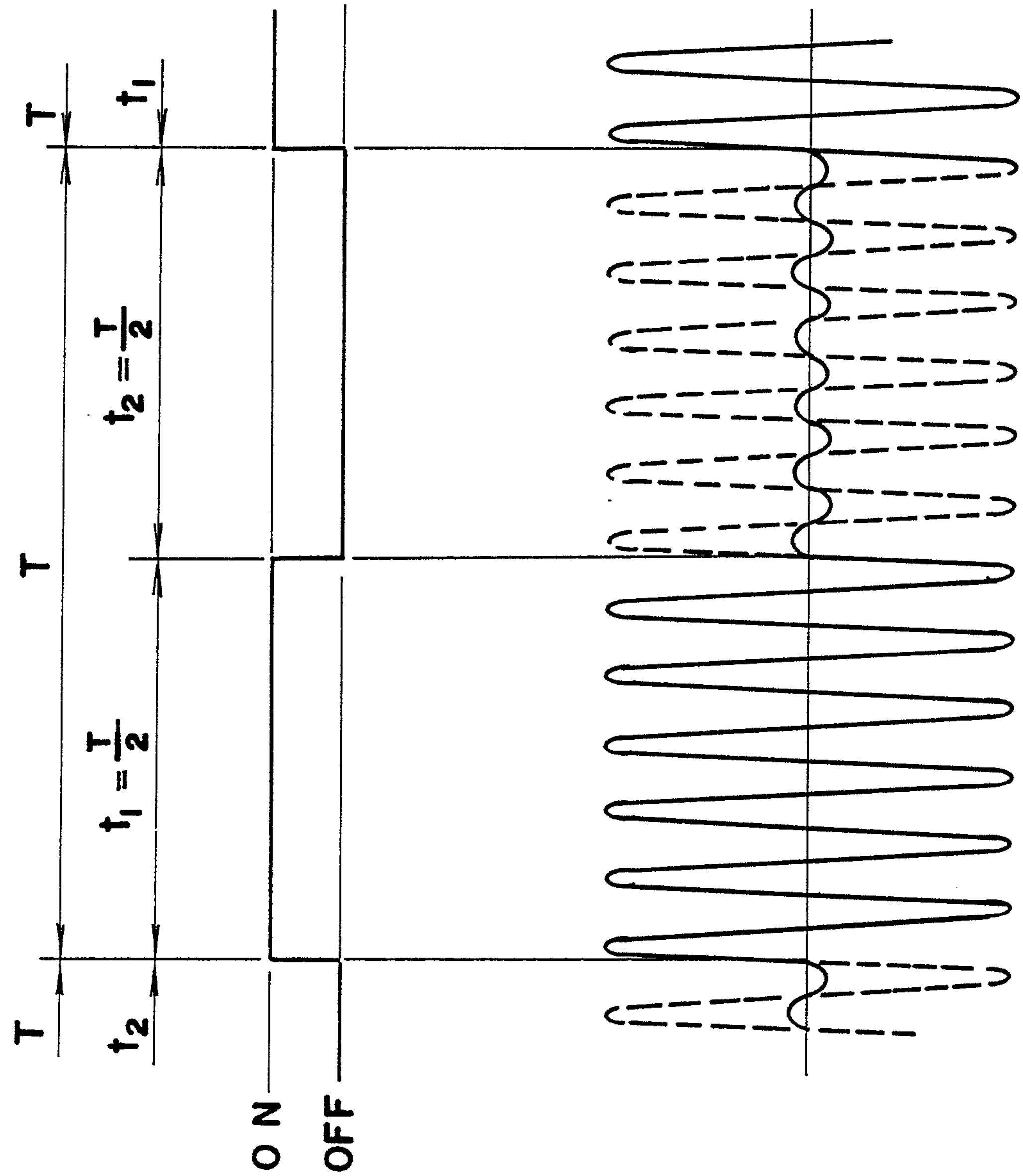


(a)

(b)

FIG. 2

FIG.3

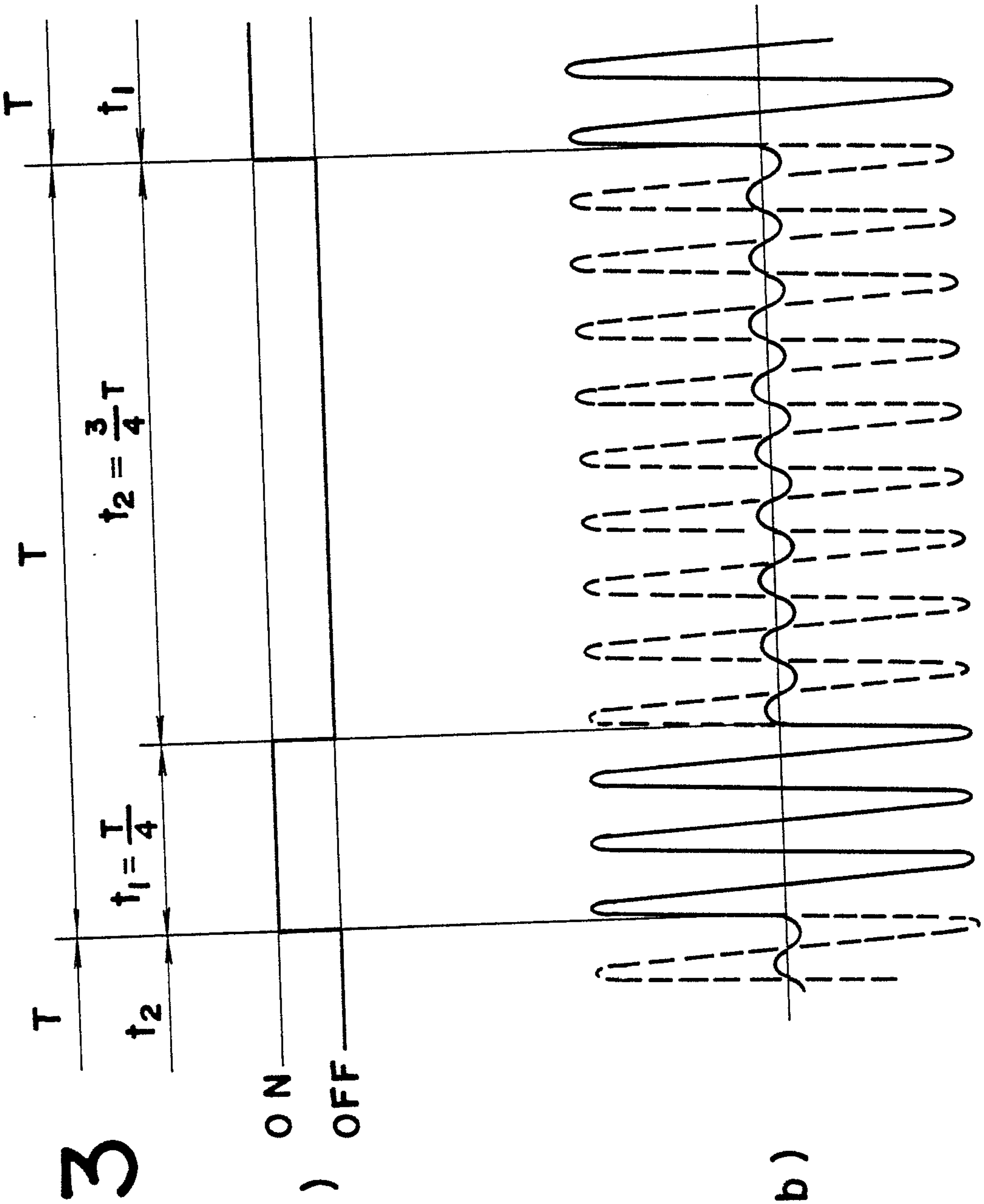


(a)

(b)

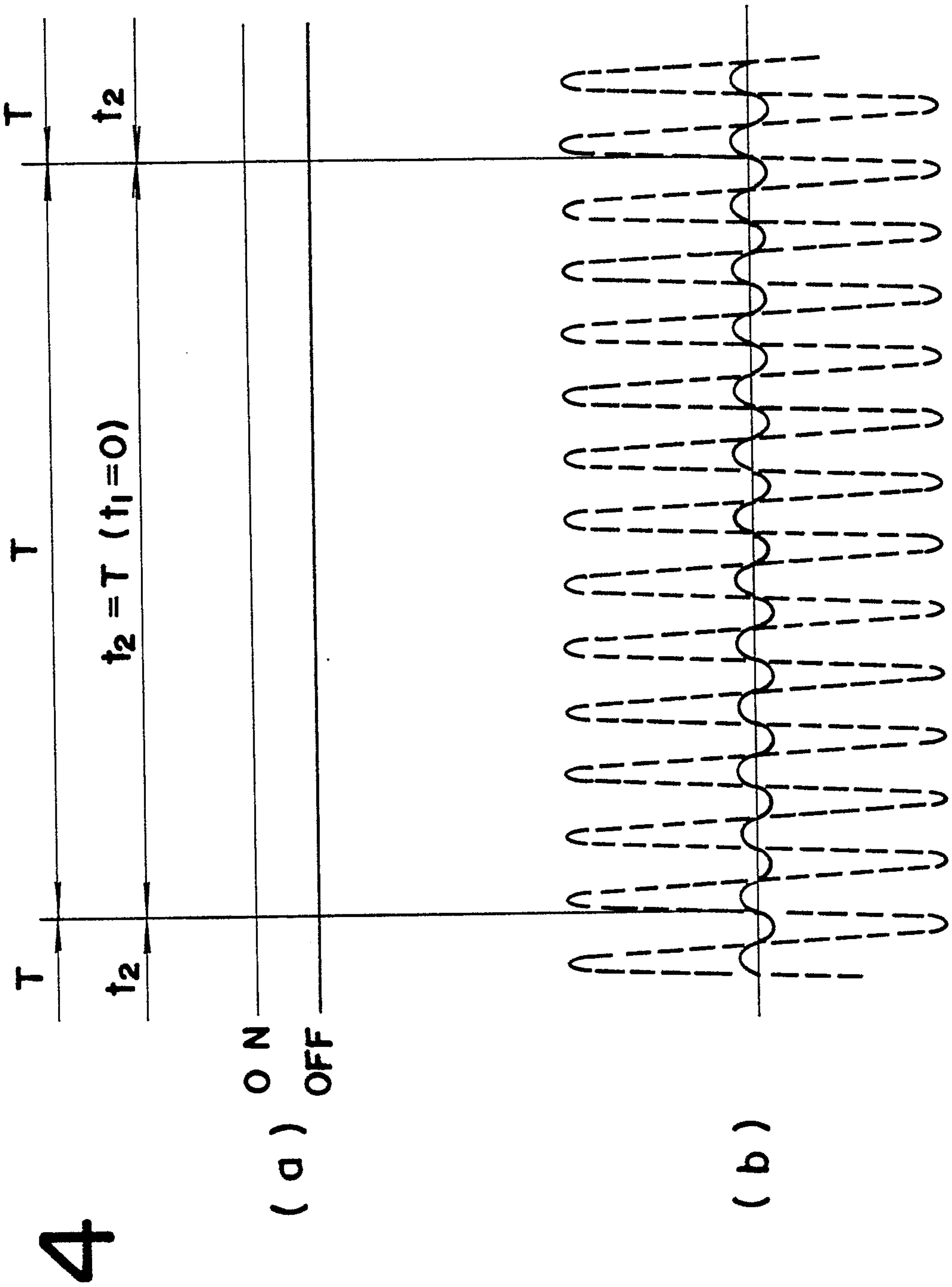


FIG.4

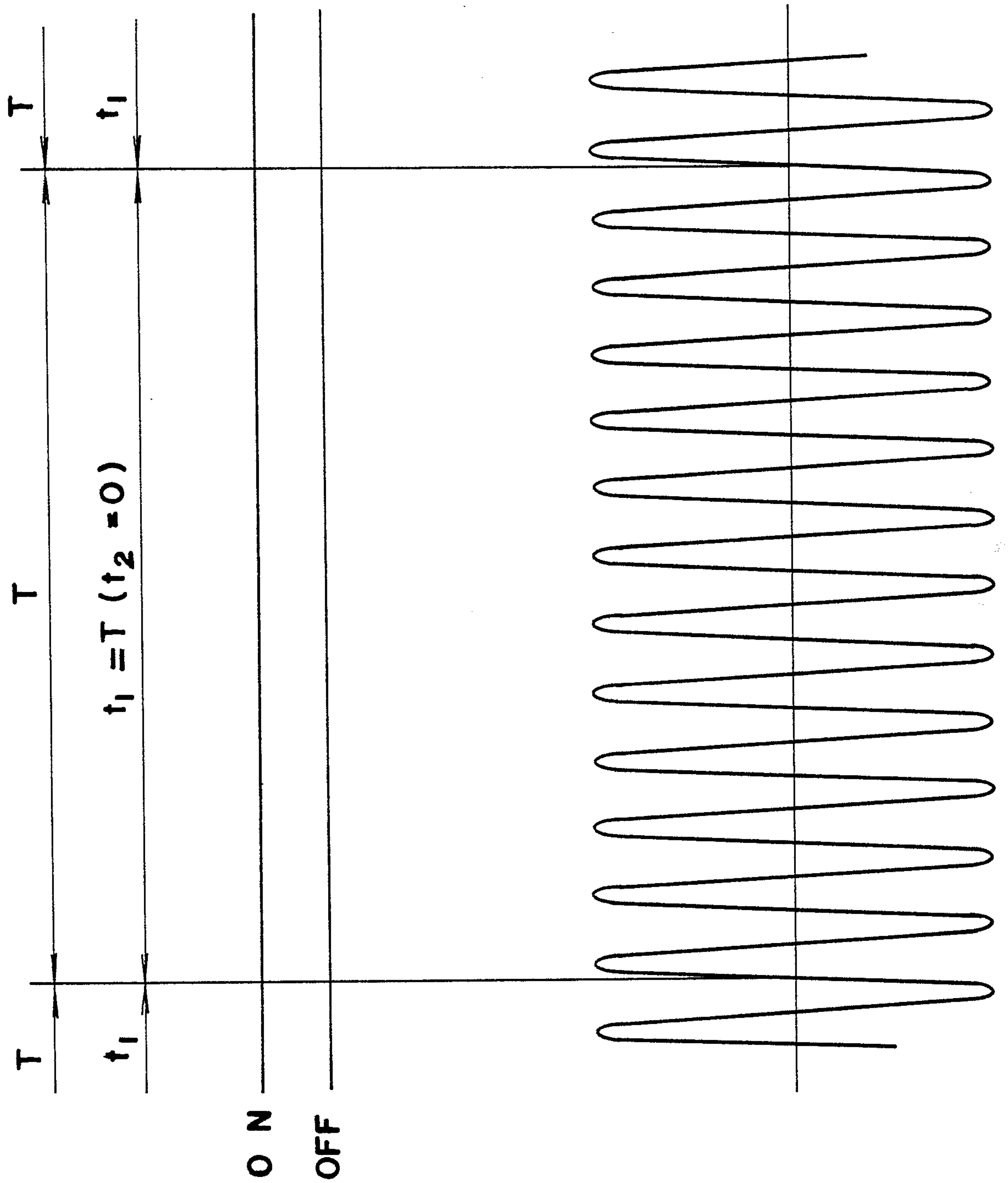


FIG. 5

FIG. 6

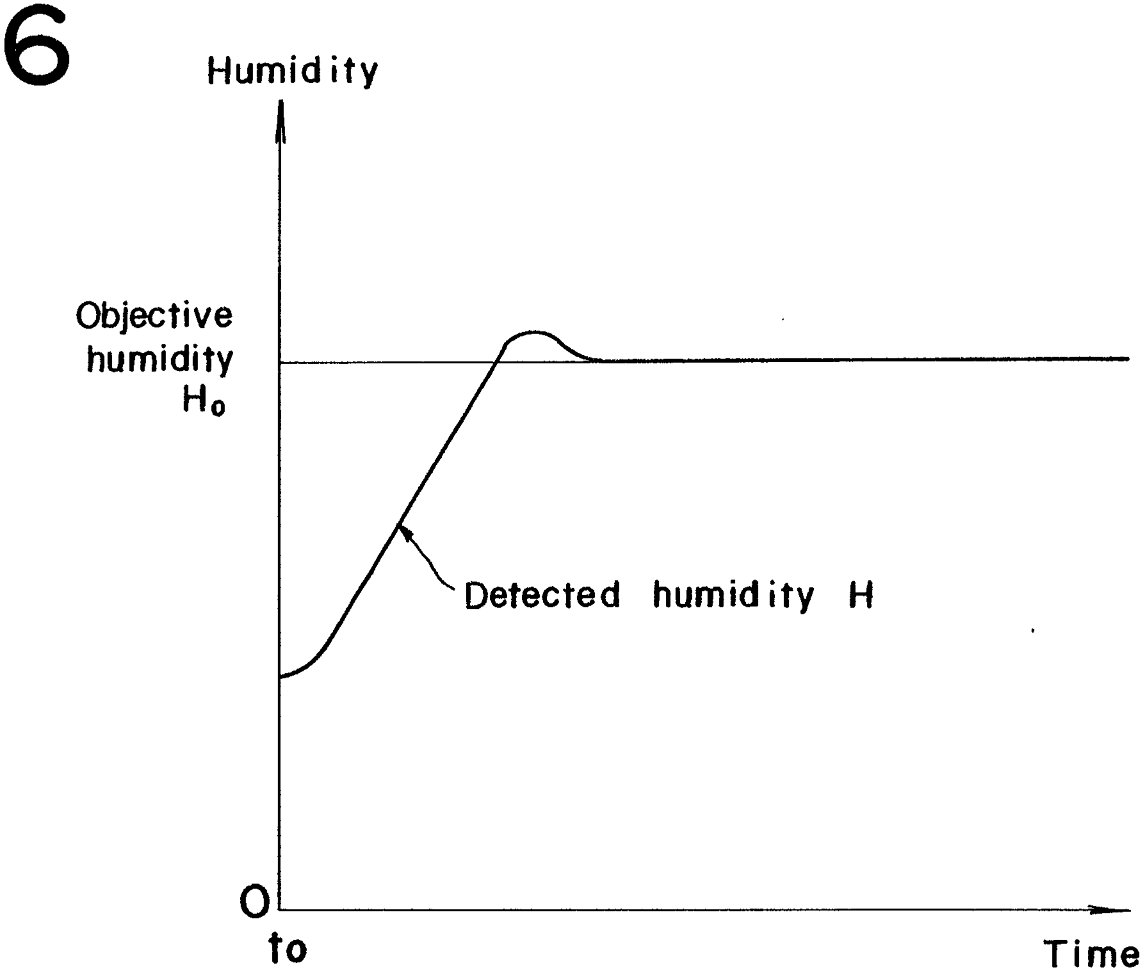
Humidity
Objective humidity $H_o$
Detected humidity H
O
to
Time

FIG. 7 (Prior art)